Europäisches Patentamt

European Patent Office

Office européen des brevets

(11) Publication number: **0 318 288 B1**

# EUROPEAN PATENT SPECIFICATION

(45) Date of publication of patent specification: **15.09.93**  (51) Int. Cl.⁵: **G01J 9/02**, G06E 3/00

(21) Application number: **88311140.3**

(22) Date of filing: **24.11.88**

(54) **Electro-optic imaging system.**

(30) Priority: **24.11.87 GB 8727446**

(43) Date of publication of application:
**31.05.89 Bulletin 89/22**

(45) Publication of the grant of the patent:
**15.09.93 Bulletin 93/37**

(84) Designated Contracting States:
**BE DE FR GB NL**

(56) References cited:
**EP-A- 0 256 300**

**APPLIED OPTICS, vol. 18, no. 12, June 1979, pages 1996-2002, New York, US; T.F. ZEHNP-FENNIG et al.: "Background suppression in double-beam interferometry"**

(73) Proprietor: **BRITISH AEROSPACE PUBLIC LIMITED COMPANY**
**Warwick House, P.O. Box 87, Farnborough Aerospace Centre**
**Farnborough, Hants. GU14 6YU(GB)**

(72) Inventor: **Hickman, Duncan c/o Sowerby Research Centre**
**British Aerospace PLC FPC 267**
**P.O. Box 5 Filton Bristol BS12 7OW(GB)**
Inventor: **Duffy, Christopher James c/o Sowerby Research Ctr.**
**British Aerospace PLC FPC 267**
**P.O. Box 5 Filton Bristol BS12 7OW(GB)**

(74) Representative: **Rackham, Stephen Neil et al GILL JENNINGS & EVERY, Broadgate House, 7 Eldon Street**
**London EC2M 7LH (GB)**

EP 0 318 288 B1

**Description**

The present invention relates to techniques for enhancing optical images. Conventional electro-optic imaging systems depend upon the detection of different intensities of light in different areas of an image in order to discriminate an object of interest. In many situations spurious signals or "clutter" obscure the signal from the object of interest. Even if the image is enhanced using such techniques as spectral filtering the difficulty of discriminating a signal in the presence of clutter remains a major limitation on the performance of the system.

EP-A-0256 300 discloses a method of processing an optical signal to recover an image from superimposed clutter, the image and the clutter having different characteristic coherence lengths, comprising applying the received optical signal to an optical interferometer system having a pair of arms the length of one of which differs from the length of the other by a distance greater than one of the characteristic coherence lengths, periodically varying the path length of one arm, detecting an amplitude modulated output of the interferometer system at a detector array, and processing the resulting signal to recover the image.

All optical signals have a characteristic coherence length. Where an object and superimposed clutter have dissimilar coherence lengths then the coherence properties of the signal carry information which is capable of being used to effect a considerable increase in the discrimination of a detection system. Conventional imaging techniques however are sensitive to intensity differences only and so discard this information. Techniques such as those described in the above cited application have been developed which combine detection of coherence information with conventional imaging based on spatial intensity distributions and so realise a significant increase in effectiveness of discrimination. This is done using an optical system which modulates the coherence information upon the intensity distribution of the received image. An optical interferometer is used to detect the coherence information and modulate the spatial intensity distribution accordingly. Using a configuration such as the well known Twyman-Green apparatus the interferometer splits the received optical signal into two components which follow different optical paths and are then recombined. The length of one path differs from that of the other by a distance greater than the coherence length of one element of the received image and less than the coherence length of another element of the image. As a result only the element having a longer coherence length interferes to create a fringe system when the two components of the signal are recombined. Periodically varying the length of one of the paths by a distance less than the offset path difference then results in selective intensity modulation with a corresponding period of those elements of the image having the longer coherence length.

These techniques make it possible for a conventional electro-optic detector to recover simultaneously both the intensity and coherence information from the signal. In practice however such techniques have been found to require complex electronic processing to recover the image using such processes as Fourier analysis and this limits the speed with which an image can be processed and the size of image which can be handled.

According to the present invention, such a method is characterised in that antiphase outputs of the interferometer system are detected independently and the resulting signals subtracted one from the other to recover the image.

The present invention provides a method which greatly simplifies the processing required to recover the image and so makes it practical to use coherence sensitive imaging in many fields where the use of prior art systems has been impractical by reason of their high cost and restricted performance.

By detecting independently antiphase outputs of the interferometer and subtracting the resulting intensity distribution one from the other the unmodulated elements of the intensity distribution are cancelled leaving just the modulated components of the image. Since in practice the system has a finite rejection ratio the result is not complete cancellation of elements of the image below a certain coherence length threshold but rather an increase in the contrast of the other elements of the image with respect to the shorter coherence length elements.

The antiphase outputs of the interferometer system may be detected by receiving one of the antiphase outputs at a detector array, storing the one output, and subsequently receiving another one of the antiphase outputs at the same detector array. Alternatively two detector arrays may be positioned to receive simultaneously antiphase outputs from different arms of the interferometer system.

According to a second aspect of the present invention, an electro-optical imaging system for recovering an image from superimposed clutter, the image and the clutter having different characteristic coherence lengths, comprising an interferometer system having two arms arranged to split a received optical signal between two paths, the path lengths differing by a distance greater than one of the characteristic coherence lengths, path varying means arranged to vary periodically the length of one of the optical paths, image

2

detector means arranged to receive an amplitude modulated output of the interferometer system, the image detector means including at least one photosensitive detector array, and signal processing means arranged to process signals from the image detector means to recover the image, is characterised in that the image detector means are arranged to detect independently antiphase outputs of the interferometer system and the signal processing means include subtracting means arranged to subtract signals from the image detector means corresponding to the antiphase outputs.

Preferably the subtracting means comprise a differential amplifier arranged to receive at its input signals from the image detection means corresponding to like pixels of the antiphase outputs.

Preferably the processing means further comprise multiplying means arranged to multiply an output from the differential amplifier by a fixed frequency reference signal.

A method and system in accordance with the present invention and the theory underlying the present invention are now described in detail with reference to the accompanying drawings, in which:-

Figure 1 is a perspective view;

Figures 2, 3, and 4 are diagrams illustrating the signal processing in a system in accordance with the present invention;

Figure 5 is a plan of an alternative embodiment;

Figure 6 is a plan of a further alternative embodiment;

Figure 7 is a diagram showing the Twyman-Green interferometer configuration;

Figure 8 is a diagram showing a detector array;

Figure 9 is a diagram showing the image in the case where background and signal occupy the total field of view;

Figure 10 is a diagram showing the image in the case where the signal occupies a single pixel;

Figure 11 is a diagram showing the image in the general case;

Figures 12A and 12B are an initial input image and an intensity plot of that image respectively;

Figures 13A and 13B are an input image with a 50% threshold and an intensity plot of that image respectively;

Figures 14A and 14B are an input image with a 75% threshold and an intensity plot of that image respectively;

Figures 15A and 15B are a differenced image and an intensity plot of that differenced image respectively; and

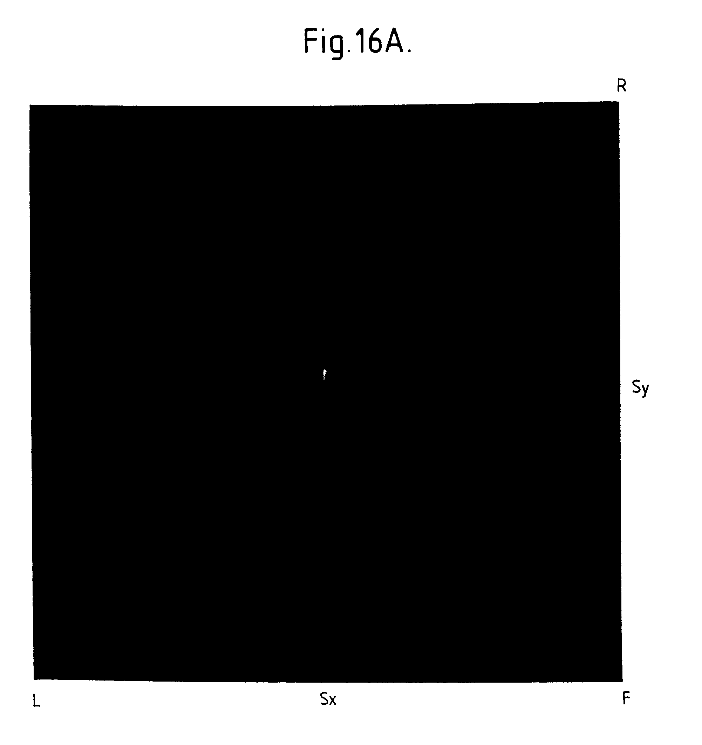

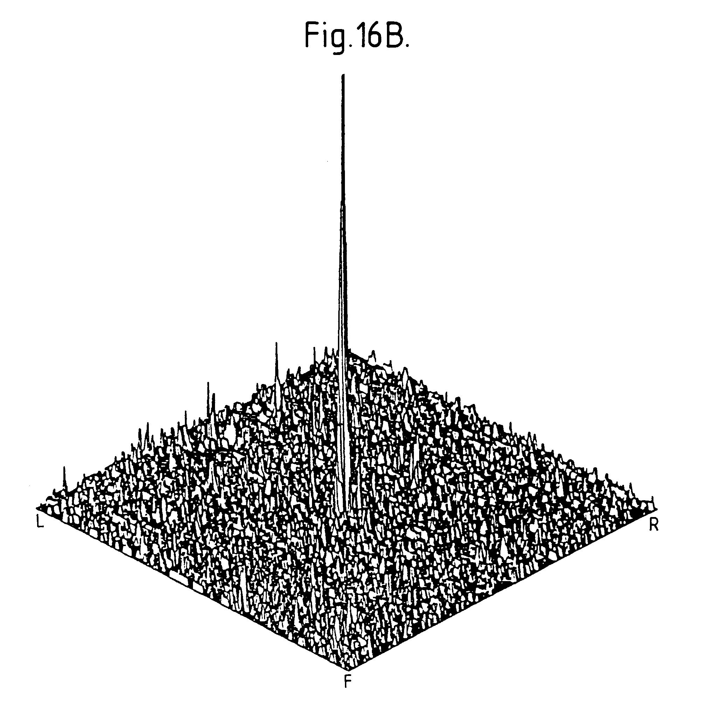

Figures 16A and 16B are a differenced image with a smoothing matrix and an intensity plot of that image respectively.

An electro-optic imaging system comprises an interferometer 1, two detector arrays 2 and associated lenses 3. The interferometer is configured as a Twyman-Green interferometer using retro-reflectors 4 rather than plane mirrors. One of the retro-reflectors 4 is attached to a piezo-electric cell 5 arranged to drive it reciprocally and so to vary the length of one arm of the interferometer 1.

In use, light from the scene containing the image which is to be detected together with superimposed clutter is focussed into the interferometer 1 by one of the lenses 3. It passes through the interferometer being split at a beam splitter 6 and recombined before being output from two orthogonal faces of the beam splitter 6. The output light from the two faces is focussed by lenses 3 onto respective photodetector arrays 2.

One of the two retro-reflectors 4 is positioned so that the optical path lengths for the associated arm of the interferometer differs from that in the other arm of the interferometer by a predetermined distance. This distance is chosen to lie between the characteristic coherence lengths of the image and the clutter. The characteristic coherence lengths may be inherently different as when, for example, the object is illuminated by laser light and the clutter is in the form of white light, or alternatively may have been produced by selective filtering of the received optical signal before it reaches the interferometer. In the case of an object illuminated by a He-Ne laser the characteristic coherence length is 30 cm. White light clutter by contrast may have a coherence length of typically 1.9 microns.

As light passes through the interferometer 1 the piezo-electric cell 5 drives one of the retro-reflectors 4 repeatedly backwards and forwards. The amplitude of the reciprocal movement is chosen according to the requirements of a particular imaging system but is typically less than ±15 microns. The offset path-difference which may be an order of magnitude greater is controlled through a combination of a fine DC bias to the piezo-electric cell 5 and use of a stepper motor attached to the retro-reflector 4 for coarse adjustments, one stepping unit corresponding to 1.25 microns. The stepper motor may be interfaced to a local computer.

The effect of combining an offset path-difference with reciprocal movement of one of the retro-reflectors 4 is to modulate selectively the intensity of the image by virtue of its longer coherence length. Since the clutter has a coherence length less than the offset path-difference it does not interfere to create a fringe system and so its intensity is not modulated by the movement of the retro-reflector 4.

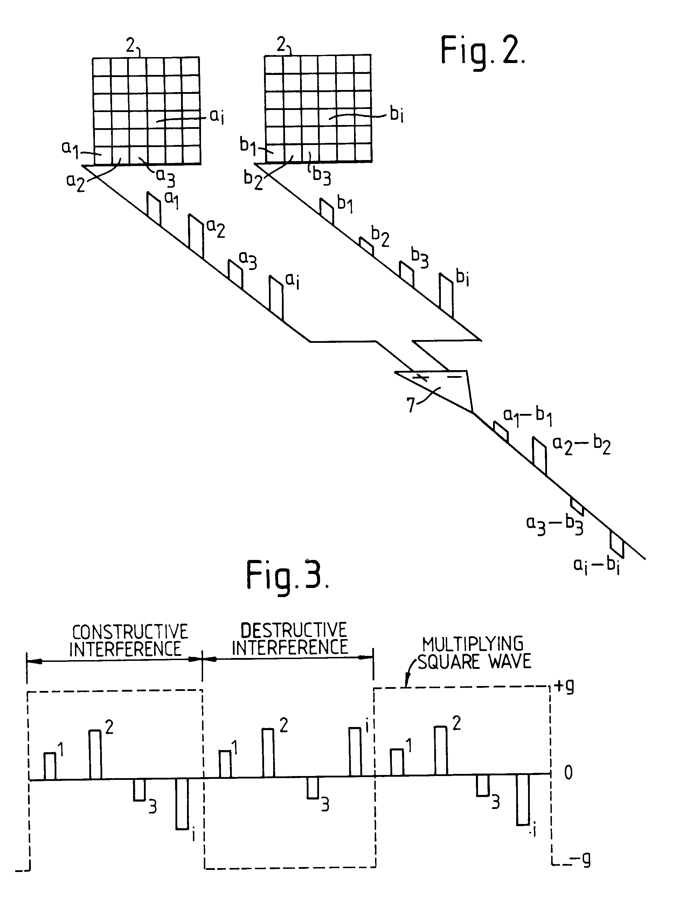

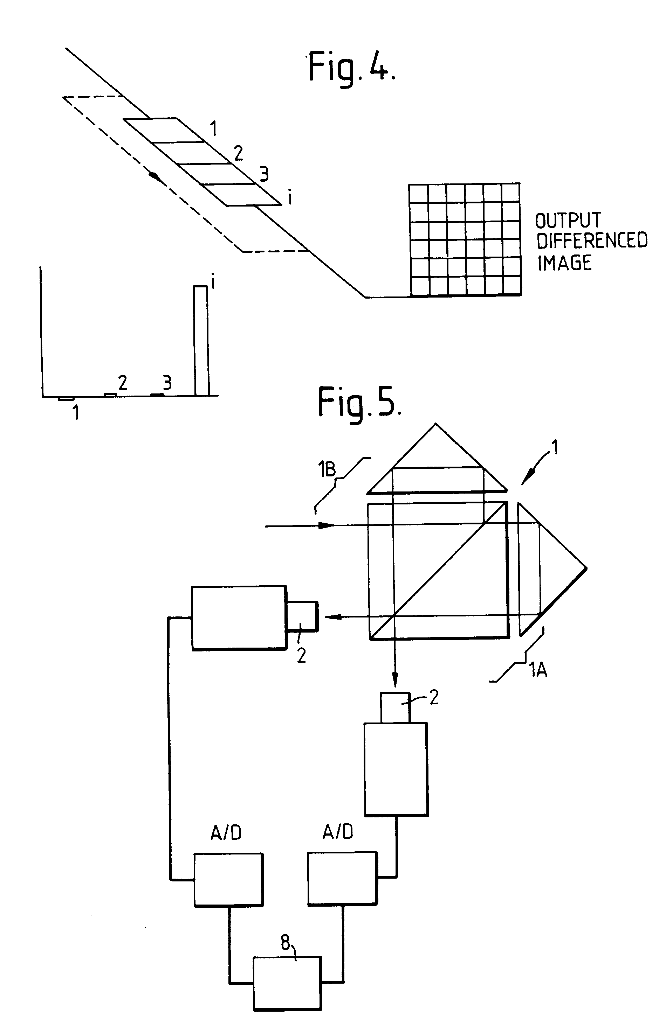

Antiphase outputs from the interferometer 1 are focussed by lenses 3 onto the photodetector arrays 2. The resulting electrical signals are then processed to recover the intensity modulated image from the unmodulated clutter, as shown in Figure 2. Signals from corresponding pixels $a_i$, $b_i$ of the two detector arrays 2 are fed to a differential amplifier 7. The differential amplifier 7 outputs a stream of values dependent upon the difference in intensities of the corresponding pixels $a_i$, $b_i$. For the reasons given in the theoretical discussions below this has the effect of cancelling the DC elements of the received image, that is those elements which are unvarying in intensity. The output from the differential amplifier 7 is further processed by multiplication with a reference wave having the same period as the intensity modulation of the image caused by the reciprocal movement of the piezo-electric cell 5. The signal is then time averaged as shown in Figure 4. This removes fixed pattern noise caused by different gains of corresponding pixels in the two arrays since this is fixed with time. The resulting signal will, in the ideal case, consist solely of the image without clutter or noise and may be output to a suitable display device or stored for further processing.

An alternative arrangement for signal processing is shown in Figure 5. Here the outputs of the detector arrays 2, which in this case are either vidicon cameras or CCD arrays, are digitised individually by A/D converters and the resulting digitised signals transmitted to a computer 8 for further processing. The same computer may be used to control the drive of the piezo-electric cell 5. The signals representing the two images are subtracted in a manner precisely analogous to that described above but using processing in the digital rather than analogue domain.

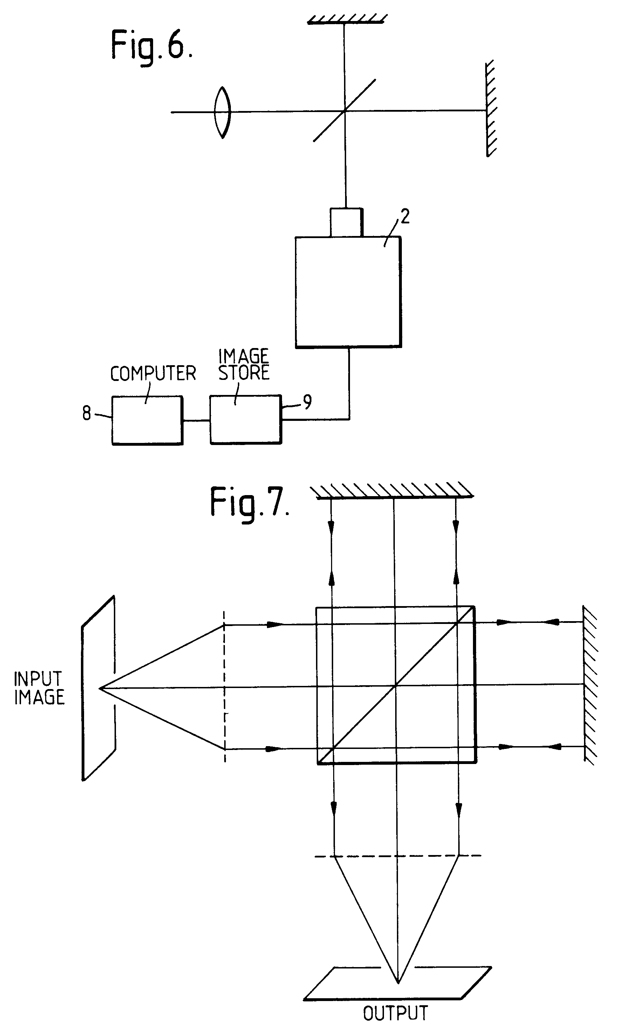

An alternative embodiment is illustrated schematically in Figure 6. Here a single vidicon camera or CCD array is used as a detector. In order to obtain the antiphase images required for processing, successive frames from the camera are stored in the image store 9 before being transmitted to the computer 8 for processing. In between the two frames the piezo-electric cell 5 moves the retro-reflector 4 by such a distance that the two images are in antiphase. The stored digitised images are then processed in the manner described above.

The theoretical background to the present invention is now discussed in detail together with relevant experimental data.

In this section we will demonstrate how temporal coherence differences of two signals can be used to discriminate between them. A framework will be established in which system improvements and gains can be measured.

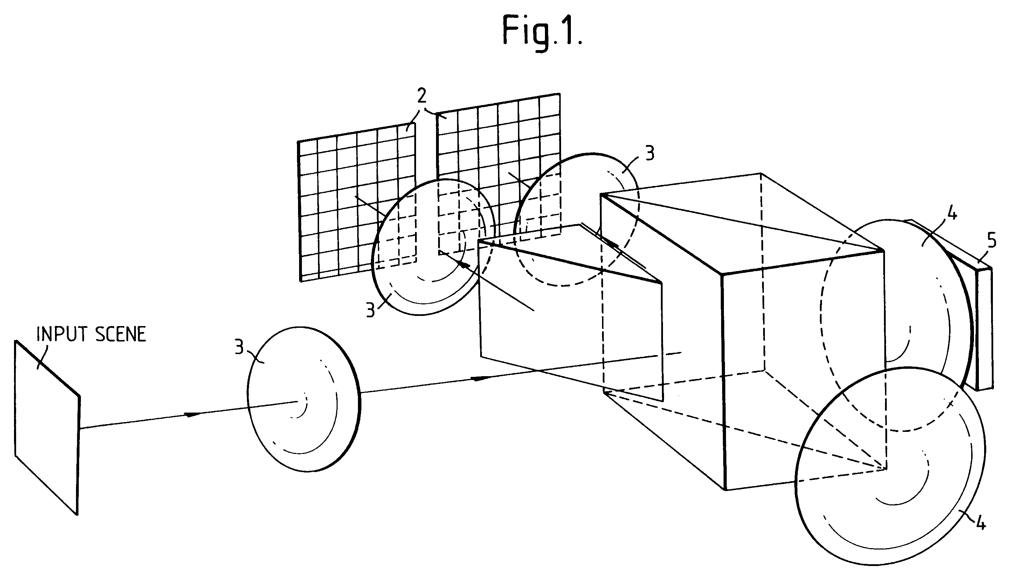

Consider the interferometric arrangement shown in Figure 1. Two output signals or channels are obtained but with the second returning in the direction of the input. The output intensity as a function of path difference, $I(x)$, is given by

$$I(x) = \int_0^{\sigma_m} B(\sigma)[1 + \cos(2\pi\sigma x + \alpha)]d\sigma \qquad (1)$$

where:

$\sigma$ = wavenumber (reciprocal wavelength)
$B(\sigma)$ = spectral intensity element of the light source at $\sigma$
$\sigma_m$ = maximum wavenumber to be considered in the spectral integration

The function $\alpha$ is a phase term arising through reflections at the air - dielectric interfaces; it takes the values of 0 and $\pi$ for the two channels provided that there is no energy absorption at the boundaries. We then have the two output terms:

$$I_1(x) = \int_0^{\sigma_m} B(\sigma)d\sigma + \int_0^{\sigma_m} B(\sigma)\cos(2\pi\sigma x)d\sigma \qquad (2a)$$

$$I_2(x) = \int_0^{\sigma_m} B(\sigma)d\sigma - \int_0^{\sigma_m} B(\sigma)\cos(2\pi\sigma x)d\sigma \qquad (2b)$$

It can be seen that $I_1$ and $I_2$ give two antiphase output modulations when $x$ is varied.

4

If the two outputs are detected and then electronically subtracted, the result will correspond to a modulation about a zero voltage - the dc term in equations 2 will cancel provided that the two outputs have the same mean power level. We can define a modulation function as:

$$m(x) = \frac{I_1(x) - I_2(x)}{I_1(x) + I_2(x)} \qquad (3)$$

Hence:

$$m(x) = \frac{\int_0^{\sigma_m} B(\sigma)\cos(2\pi\sigma x)d\sigma}{\int_0^{\sigma_m} B(\sigma)d\sigma} \qquad (4)$$

The numerator in equation 4 is related to the coherence length, L, of the source which is the distance over which interference can be observed

For a broad spectral input, the modulation rapidly decreases as $x$ increases which consequently gives a short coherence length and hence modulation packet. Conversely, for the case of a narrow spectral profile, modulation is produced over a large range in path difference. The function $m(x)$ is illustrated in figure 2 for three sources of coherence lengths $L_B$, $L_{S1}$ and $L_{S2}$. Here, $L_{S1}$ and $L_{S2}$ correspond to the signals to be detected and $L_B$ is that associated with the background clutter. If the interferometer has a mean path difference $x_0$ where:

$$L_B < x_0 < L_{S1} \qquad (5a)$$

or

$$L_B < x_0 < L_{S2} \qquad (5b)$$

then only the signal of interest will produce a significant modulation which can be observed when the mirror is oscillated with a small amplitude about $x_0$.

In the case of the scanning mirror it is more useful to consider the envelope of $|m(x)|$ denoted by $M(x)$. The increase in the modulation of the signal relative to the background is given by:

$$\chi(x) = \frac{M_S(x)}{M_B(x)} \qquad (6)$$

where $\chi(x)$ is the rejection ratio. From this we can define the signal to clutter intensity ratio ($S/C$) at $x$ relative to the ratio of the input signal levels by:

$$S/C(x) = \chi(x)S/C(0) \qquad (7)$$

where $S/C(0)$ is the ratio of the signal to background input flux levels. Finally, it should be mentioned that an alternative method to using both outputs from the sensor would be to detect one channel only and couple this to an ac detection system. However, there are two major disadvantages to doing this: by detecting just one output not only is the immunity to clutter intensity fluctuations lost (which are independent of coherence) but also only half of the available input flux is utilised.

When coherence detection is used in an imaging system a compromise between the signal to noise ratio (S/N), the signal to clutter ratio (S/C(x)), pixel noise and resolution is involved. These properties in turn depend upon the physical size of the sources. In the discussion below the trade-off between system

5

parameters is discussed with respect to the physical extent of the signal and clutter within a field of view. Results obtained with one embodiment of the present invention are described.

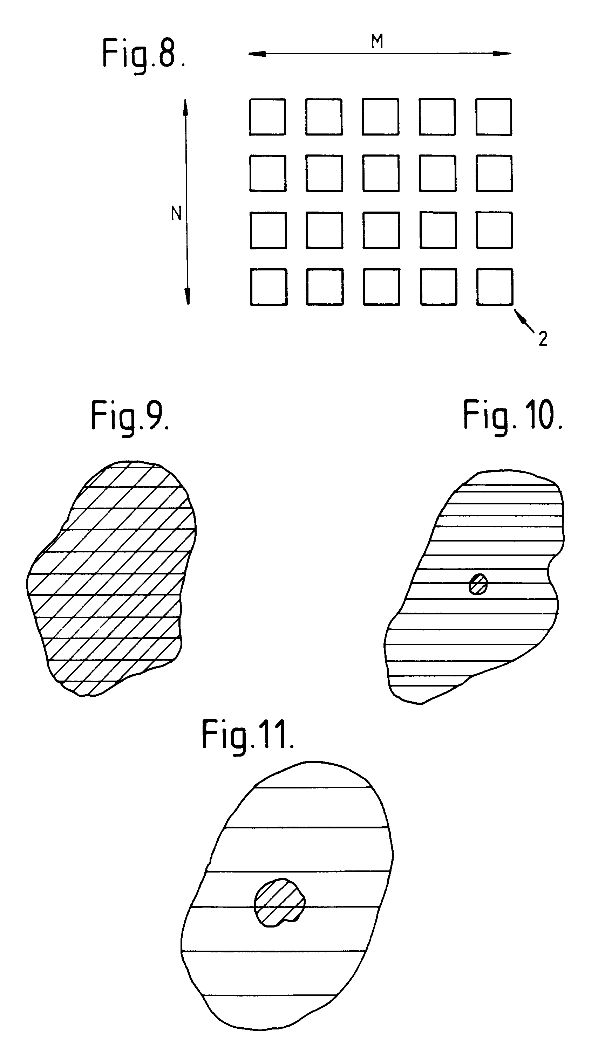

The coherence sensor can be modified to incorporate imaging by using the Twyman-Green configuration shown in Figure 7. This is essentially an adaptation of a Michelson interferometer. By means of the lens $L_1$, each point source is converted to set of plane waves whose propagation direction is at a particular angle to the optical axis. This angular information is then converted back to positional coordinates by $L_2$. The input image is related to the output image by

$$\begin{pmatrix} O_x \\ O_y \end{pmatrix} \rightarrow \begin{pmatrix} -mO_x \\ -mO_y \end{pmatrix}$$

where,

$$m = \frac{f_2}{f_1}$$

and $f_1, f_2$ are the focal lengths of the lenses shown in Figure 7.

The output from the imaging system will depend on the arrangement of the mirrors. If they are inclined to each other then the interference pattern will be localised at the mirror plane (fringes of equal thickness or Fizeau fringes). This will, in general, be in a different plane to the scene and the position of the image and interference pattern will not coincide in the Twyman-Green system. The two positions can be made conincidental by imaging the scene at the region of the mirrors. However, this would result in converging light passing through the interferometer and this could lead to severe aberrations of the wavefront by the beamsplitter. If the mirrors are parallel, however, then the interference modulation is localised at infinity (fringes of equal inclination or Hadinger fringes). This modulation can be made to coincide with the image in the interferometer. The form of the modulation will be similar to that described above but with the important difference that the modulation will occur at the equivalent source position. Another disadvantage of using the fringes of equal thickness is that the electronic processing requirements would be more demanding. Thus the imaging system envisaged would be based on the fringes of equal inclination.

One possible type of detector that would be suitable for use in the imaging system is a two dimensional CCD array (figure 8). This would allow a pixel by pixel processing and analysis routine to be used and this could be carried out over a time period that is short compared to the television frame rate. If a digital technique is used, the limiting time factor would be the A/D conversion process which would require between $0.2N^2\mu s$ and $2N^2\mu s$. The main advantage of processing the signals digitally is that the error in associating the pixels between the arrays is greatly reduced. Since we are no longer dealing with a single element detector, the source size relative to the pixel size must be considered. This can, in fact, lead to an additional degree of control and discrimination in the coherence sensor. The system is illustrated in figure 1 . The following is a summary of the possible situations that will be encountered in practise. In these, the equations for the signal to noise ratio assume that the background intensity is much greater than the signal. Also, the background will, in all cases, be assumed to extend throughout the field of view.

(a) The signal extends throughout the field of view (figure 9)
If the array has $M \times M$ pixels then the shot-noise is given by

$$N \propto \sqrt{\frac{I_B}{M^2}} \qquad\qquad 10.1$$

and the signal is given by

$$S \propto \frac{I_S}{M^2} \qquad\qquad 10.2$$

Here, $I_B$ and $I_S$ are the background and signal flux levels. Hence, the signal-to-noise is given by

$$(S/N)_{array} \propto \frac{1}{M}\frac{I_S}{\sqrt{I_B}} \qquad\qquad 10.3$$

In terms of the $S/N$ of the single detector case we have

$$(S/N)_{array} \propto \frac{1}{M}(S/N) \qquad\qquad 10.4$$

The signal to clutter ratio remains unchanged. However, the absolute signal level is reduced by a factor of $M^2$ and this could be a critical factor in cases where the noise is of a non-shot type. For thermal noise the level is independent of the background intensity. The $S/N$ is given by

$$(S/N)_{array} \propto \frac{1}{M^2}(S/N) \qquad\qquad 10.5$$

This degradation could be very limiting for the array system.

(b) The signal occupies a single pixel (figure 10).

As before, in the shot noise case

$$N \propto \sqrt{\frac{I_B}{M^2}} \qquad\qquad 10.6$$

but now

$S \propto I_S \qquad 10.7$

and this consequently modifies the $S/N$ equation to

$(S/N)_{array} \propto M(S/N) \qquad 10.8$

The signal to clutter intensity ratio is modified to

$(S/C)_{array} \propto M^2(S/C) \qquad 10.9$

Thus in this case both the $S/N$ and $S/C$ are increased.
For the case of thermal noise we have

$(S/N)_{array} \propto (S/N) \qquad 10.10$

and there is no change in the noise level.

(c) The general case (figure 11).

If we assume that the signal occupies $A \times B$ pixels and the background $C \times D$ pixels then for the shot noise case

$$(S/N)_{array} \propto \frac{\sqrt{C \times D}}{A \times B} (S/N) \qquad 10.11$$

and

$$(S/C)_{array} \propto \frac{C \times D}{A \times B} (S/C) \qquad 10.12$$

Hence, depending on whether the $S/N$ or $S/C$ requirements are the more critical we can state that
(i) the signal to noise will not be degraded provided that

$$A \times B \leq \sqrt{(C \times D)} \qquad 10.13$$

(ii) The signal to clutter will not be degraded provided that

$$A \times B \leq C \times D \qquad 10.14$$

In the thermal noise case we have

$$(S/N)_{array} \propto \frac{1}{\sqrt{A \times B}} (S/N) \qquad 10.15$$

Hence when the signal is integrated over more than one pixel the signal to noise is always less than that for the single detector case.

Another parameter that must be considered is the pixel size since this will affect the $S/C$, $S/N$, the resolution and the pixel noise. The optimisation of the first two factors have been described previously. The resolution requirement will be defined by the positional accuracy needed and this will depend on the particular application. The pixel or fixed pattern noise is due to differences in outputs between adjacent pixels (for the same incident flux) and is a consequence of the variations in the properties of the silicon substrate. Thus the larger the pixels are, the more these fluctuations are averaged and the smaller the noise becomes.

Signal Recovery - the Addition of a PSD

A PSD can be incorporated into the imaging system but in order to give an output sensitive to signal position, the electronic processing would necessarily be more complex.

The processing required is illustrated in figure 2. The pixel stream from each image is line feed into a differential amplifier. If the input images are updated at 50$Hz$, the output difference image will be modulated at 50$Hz$. By multiplying by a wave at 25$Hz$ (figure 3) the output will be equivalent to that from a demodulator. The low-pass filtering or integration stage can be accomplished by either a digital frame storing technique or by directly outputting the differenced signal to a T.V. monitor or array (figure 4). The latter of these is equivalent to time-averaging. Finally, it should be noted that this procedure would be independent of different pixel gains.

## Experimental Demonstration of Imaging

An experimental validation of the imaging technique has been made.

The system used is illustrated in figure 6. The interferometer was set at a fixed path-difference that corresponded to the constructive interference of the signal but which had $x_0 \gg L_B$. This was recorded on a video tape. Next, the path-difference was changed such that the signal destructively interfered. This was again recorded. By digitally subtracting the two frames, a differenced image was obtained.

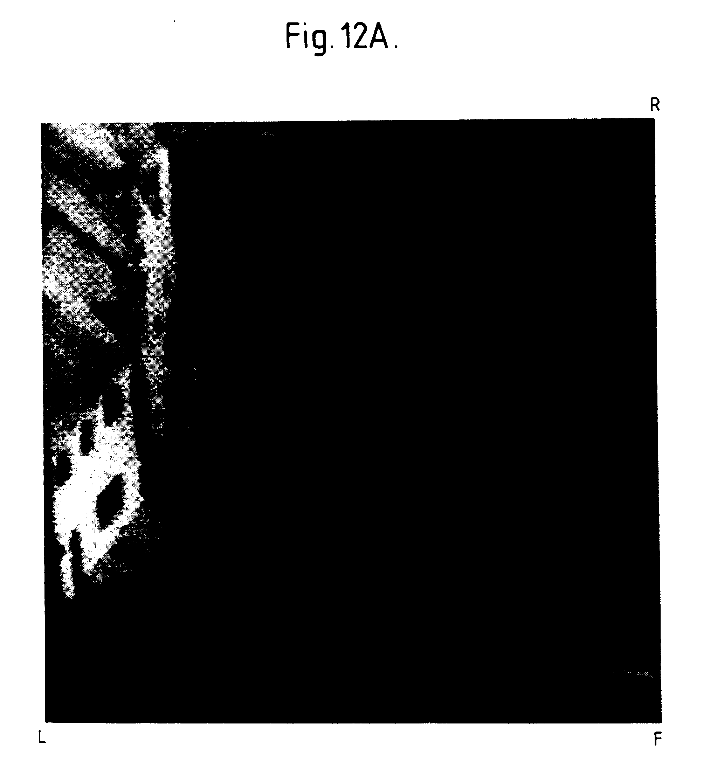

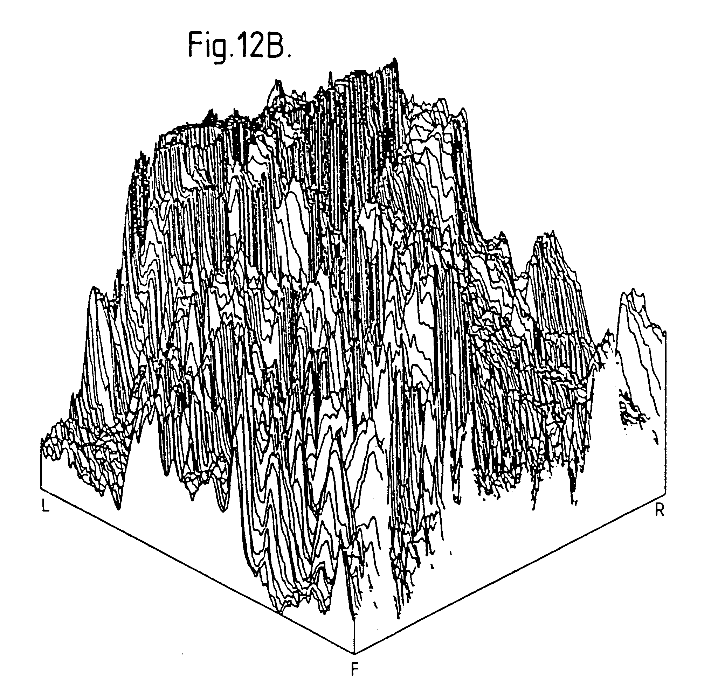

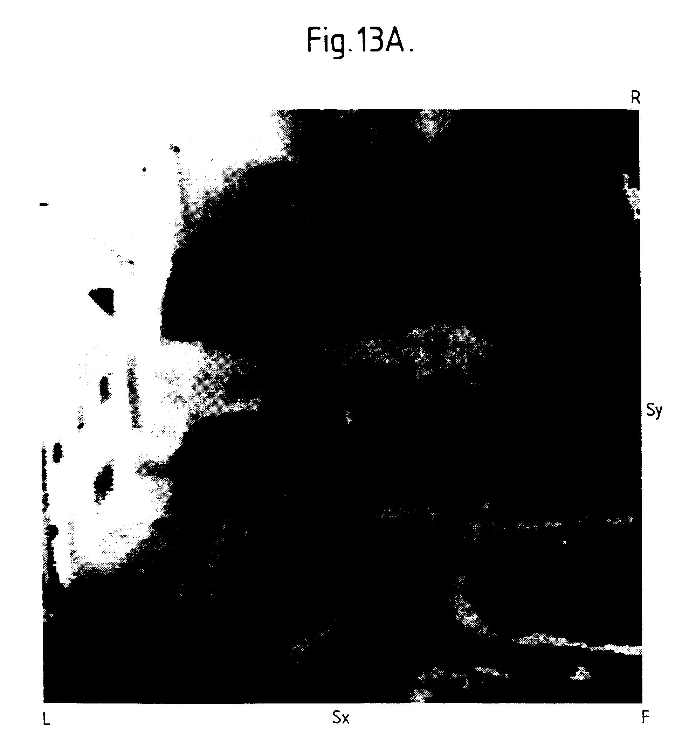

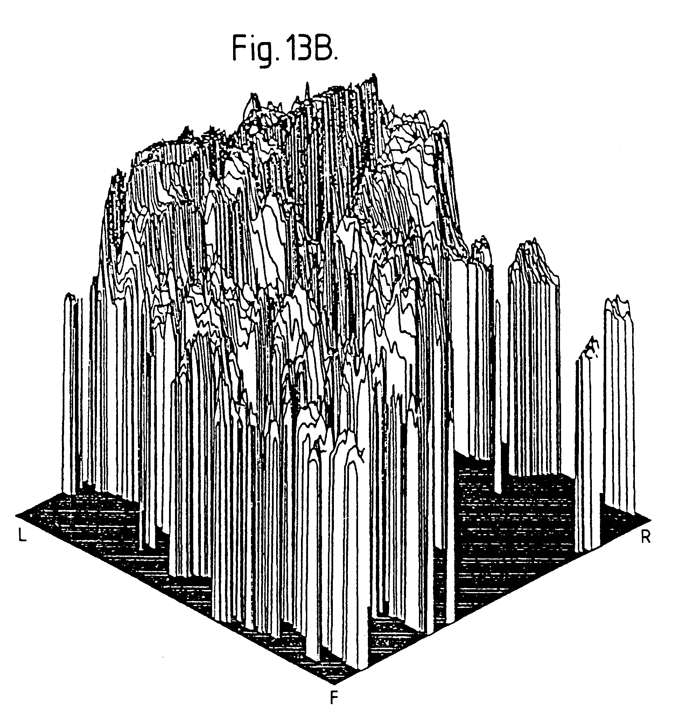

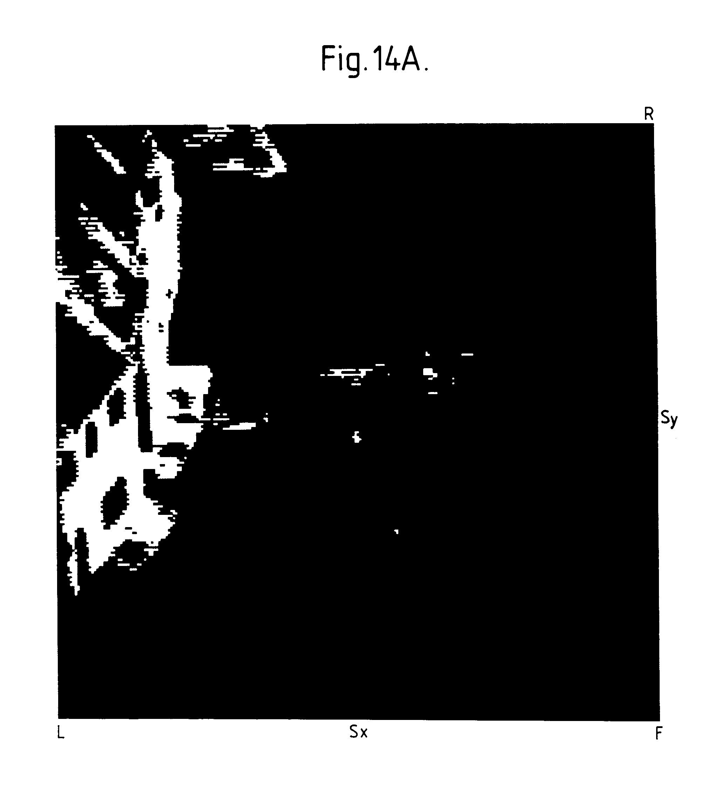

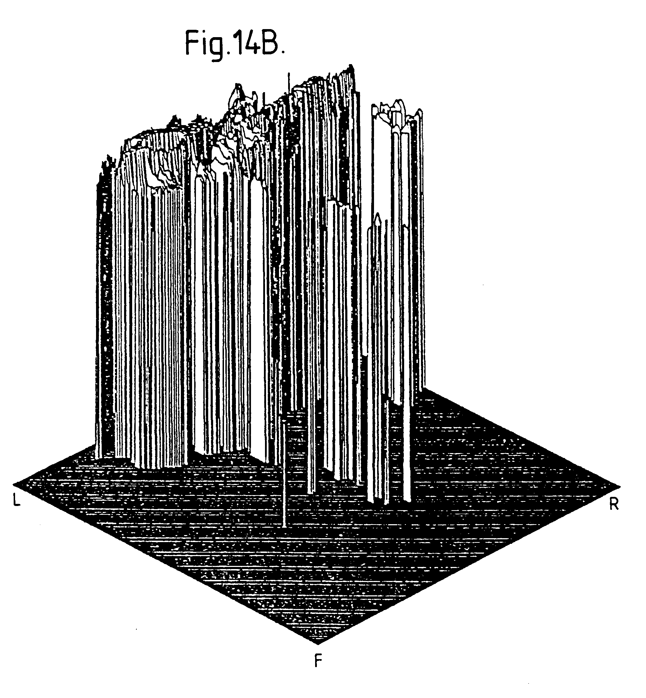

For this demonstration a laser within a given scene was used. This is shown in figure 12 together with its intensity plot. The positional coordinates L,F and R show the correspondence between the two figures. The input scene is from the BAe terrain model and shows two tanks passing through a village. A He-Ne laser beam has been reflected off the first tank and can be seen to the right of the barrel. The image is quite poor a regards resolution. This is due to the high magnification required because of the small input aperture aperture of the interferometer. Figures 13 and 14 show the image with a 50% and 75% threshold level respectively. The laser beam can be located by the coordinates $S_z$ and $S_y$. It will be noted that even the thresholded images contain a very high level of clutter which would prevent detection.

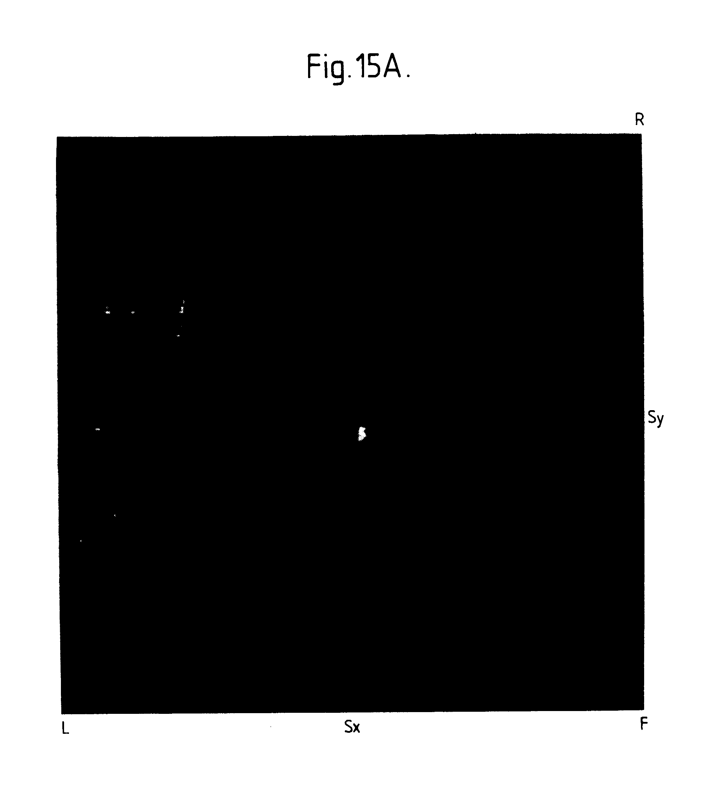

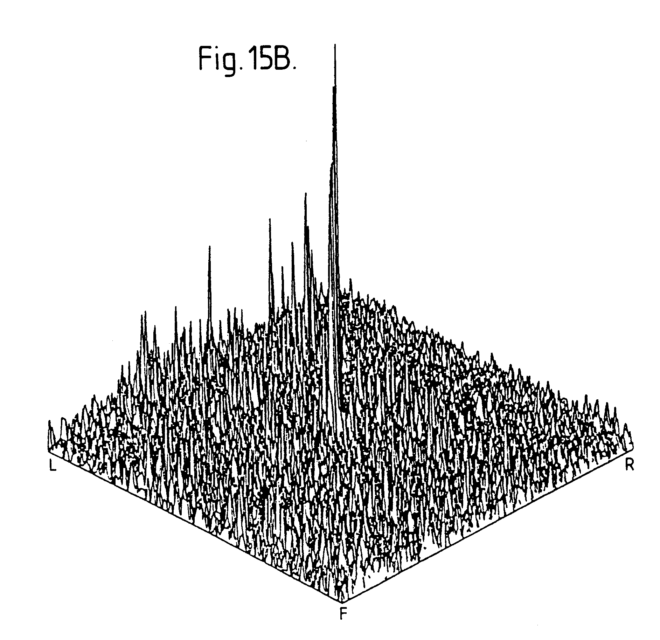

The difference image is shown in figure 15 together with its intensity distribution. The presence of the laser is clearly evident. The other spikes are due to a sub-pixel misalignment of the two recorded images prior to differencing and this is a consequence of the poor subtraction method. The spikes on the left-hand side of the image correspond to the high contrast edges of the buildings. In the CCD imaging system this residual clutter (which is independent of coherence) could be significantly reduced by both accurate alignment of the elements and the use of a PSD. This alignment can be achieved by using a telescope in the position of the source which is focussed onto the overlapping images of the array elements. In order to reduce the misalignment and give a more representative output, a $3 \times 3$ averaging matrix was scanned over the intensity plot of the differenced image. The result is shown in figure 17 together with the original plot for comparison.

## Claims

1. A method of processing an optical signal to recover an image from superimposed clutter, the image and the clutter having different characteristic coherence lengths, comprising applying the received optical signal to an optical interferometer system (1) having a pair of arms (1A,1B), the length of one of which differs from the length of the other by a distance greater than one of the characteristic coherence lengths, periodically varying the path length of one arm (1A,1B), detecting an amplitude modulated output of the interferometer system (1) at a detector array (2), and processing the resulting signal to recover the image, characterised in that antiphase outputs of the interferometer system are detected independently and the resulting signals subtracted one from the other to recover the image.

2. A method according to claim 1, in which the antiphase outputs of the interferometer system (1) are detected by receiving a first output at a detector array (2), storing the first output, and subsequently receiving a second output in antiphase to the first output at the same detector array (2).

3. A method according to claim 1, in which the antiphase outputs of the interferometer system (1) are detected by positioning respective detector arrays (2) at respective outputs of the pair of arms (1A,1B), and receiving substantially simultaneously the antiphase outputs from the said arms (1A,1B).

4. An electro-optical imaging system for recovering an image from superimposed clutter, the image and the clutter having different characteristic coherence lengths, comprising an interferometer system (1) having a pair of arms (1A,1B) and arranged to split a received optical signal between two paths, the path lengths differing by a distance greater than one of the characteristic coherence lengths, path varying means (5) arranged to vary periodically the length of one of the optical paths, image detector means (2) arranged to receive an amplitude modulated output (1) of the interferometer system (1), the image detector means (2) including at least one photosensitive detector array, and signal processing means arranged to process signals from the image detector means (2) to recover the image, characterised in that the image detector means (2) are arranged to detect independently antiphase outputs of the interferometer system and the signal processing means (7) include subtracting means arranged to subtract signals from the image detector means (2) corresponding to the antiphase outputs.

EP 0 318 288 B1

5. An imaging system according to claim 4, in which the image detector means (2) comprise a pair of photosensitive detector arrays arranged to receive antiphase outputs from respective arms of the interferometer system.

6. An imaging system according to claim 4, in which the image detector means (2) comprise a single video camera and means (8) to store an image output by the camera.

7. An image system according to any one of claims 4 to 6 in which the subtracting means (7) comprise a differential amplifier arranged to receive at its input signals from the image detection means (2) corresponding to like pixels of the antiphase outputs.

8. A system according to claim 7, in which the processing means further comprise multiplying means arranged to multiply an output from the differential amplifier by a fixed frequency reference signal.

**Patentansprüche**

1. Verfahren zur Verarbeitung eines optischen Signals, um eine Abbildung aus überlagertem Lärm rückzugewinnen, wobei die Abbildung und der Lärm verschiedene charakteristische Kohäsionslängen haben, wobei das Verfahren umfasst, das empfangene optische Signal auf ein optisches Interferometersystem (1) mit einem Paar Armen (1A,1B) anzuwenden, wobei die Länge eines Armes von der Länge des anderen Armes durch eine Entfernung verschieden ist, die grösser als eine der charakteristischen Kohäsionslängen ist, Weglänge eines Armes (1A,1B) periodisch zu ändern, eine durch die Amplitude modulierte Ausgabe des Interferometersystems (1) bei einer Nachweisanordnung (2) nachzuweisen, und das sich ergebende Signal zu verarbeiten, um das Bild rückzugewinnen, dadurch gekennzeichnet, das Gegenphasenausgaben des Interferometersystems unabhängig nachgewiesen werden, und die sich ergebenden Signale voneinander substrahiert werden, um das Bild rückzugewinnen.

2. Verfahren nach Anspruch 1, in dem die Gegenphasenausgaben des Interferometersystems (1) nachgewiesen werden, indem eine erste Ausgabe an einer Nachweisanordnung (2) empfangen wird, die erste Ausgabe gespeichert wird, und nachfolgend eine zweite Ausgabe in Gegenphase zu der ersten Ausgabe an derselben Nachweisanordnung (2) zu empfangen.

3. Verfahren nach Anspruch 1, in dem die Gegenphasenausgaben des Interferometersystems (1) nachgewiesen werden, indem entsprechende Nachweisanordnungen (2) an entsprechenden Ausgaben des Paares von Armen (1A,1B) angeordnet werden, und die Gegenphasenausgaben von den Armen (1A,1B) im wesentlichen gleichzeitig empfangen werden.

4. Elektrooptisches Abbildungssystem zur Rückgewinnung einer Abbildung aus überlagertem Lärm, wobei die Abbildung und der Lärm verschiedene charakteristische Kohäsionslängen haben, das ein Interferometersystem (1) mit einem Paar von Armen (1A,1B) umfasst, und angeordnet ist, um ein empfangenes optisches Signal zwischen zwei Wegen aufzuspalten, wobei die Weglängen durch eine Entfernung verschieden sind, die grösser als eine der charakeristischen Kohäsionslängen ist, Wegänderungsmittel (5), die angeordnet sind, um die Länge eines der optischen Wege periodisch zu ändern, Abbildungsnachweismittel (2), die angeordnet sind, um eine durch die Amplitude modulierte Ausgabe (1) des Interferometersystems (1) zu empfangen, wobei die Abbildungsnachweismittel (2) wenigstens eine lichtempfindliche Nachweisanordnung einschliessen, und Signalverarbeitungsmittel, die angeordnet sind, um Signale von den Abbildungsnachweismitteln (2) zu verarbeiten, um die Abbildung rückzugewinnen, dadurch gekennzeichnet, dass die Abbildungsnachweismittel (2) angeordnet sind, um Gegenphasenausgaben des Interferometersystems unabhängig nachzuweisen, und die Signalverarbeitungsmittel (7) Subtraktionsmittel einschliessen, die angeordnet sind, um Signale von den Abbildungsnachweismitteln (2), die den Gegenphasenausgaben entsprechen, zu substrahieren.

5. Abbildungssystem nach Anspruch 4, in dem die Abbildungsnachweismittel (2) ein Paar lichtempfindliche Nachweisanordnungen umfassen, die angeordnet sind, um Gegenphasenausgaben von entsprechenden Armen des Interferometersystems zu empfangen.

6. Abbildungssystem nach Anspruch 4, in dem die Abbildungsnachweismittel (2) eine einzige Videokamera umfassen, und Mittel (8), um eine Abbildungsausgabe in der Kamera zu speichern.

10

**7.** Abbildungssystem nach einem der Ansprüche 4 bis 6, in dem die Abziehmittel (7) einen Differentialverstärker umfassen, der angeordnet ist, um an seinem Eingang Signale von den Abbildungsnachweismitteln (2), die gleichen Rasterpunkten der Gegenphasenausgaben entsprechen, zu empfangen.

**8.** System nach Anspruch 7, in dem die Verarbeitungsmittel weiterhin Multiplikationsmittel umfassen, die angeordnet sind, um eine Ausgabe von dem Differentialverstärker mit einem festen Frequenzreferenzsignal zu multiplizieren.

**Revendications**

**1.** Méthode de traitement de signal optique de façon à récupérer une image à partir de signaux parasites superposés, l'image et les signaux parasites étant de longueurs de cohérence caractéristique différentes, comportant l'application du signal optique reçu par un système d'interféromètre optique (1) ayant une paire de bras (1A,1B), dont la longueur d'un bras est différente par rapport à l'autre d'une distance supérieure à l'une des longueurs de cohérence caractéristique, la longueur de parcours d'un bras (1A, 1B) variant périodiquement, captant par un dispositif capteur (2) une sortie d'amplitude modulée du système d'interféromètre optique (1) et traitant le signal ainsi obtenu pour récupérer l'image, **caractérisé en ce que** les sorties d'antiphase de système d'interféromètre sont captées de façon indépendante et les signaux qui en résultent sont défalqués l'un de l'autre pour récupérer l'image.

**2.** Méthode selon la revendication 1, dont les sorties d'antiphase de système interféromètre (1) sont captées suite à la réception d'une première sortie de dispositif capteur (2), la mise en mémoire de la première sortie, et par la suite la réception d'une deuxième sortie en antiphase par rapport à la première sortie du même dispositif capteur (2).

**3.** Méthode selon la revendication 1, dont les sorties d'antiphase de système interféromètre (1) sont captées par la mise en position des dispositifs capteurs respectifs (2) aux sorties respectives de la paire de bras (1A,1B) et la réception essentiellement simultanée des sorties d'antiphase desdits bras (1A,1B).

**4.** Système électro-optique de visualisation pour récupérer une image depuis des signaux parasites superposés, l'image et les signaux parasites étant de longueurs différentes de cohérence caractéristique, comportant un système interféromètre (1) ayant une paire de bras (1A,1B) et agencé pour diviser un signal optique en deux parcours, dont les longueurs de parcours sont différentes d'une distance supérieure à l'une des longueurs caractéristiques de cohérence, des moyens de variation de parcours (5) agencés pour la modification périodique de la longueur d'un des parcours optiques, des moyens capteurs d'image (2) agencés pour recevoir une sortie d'amplitude modulée (1) du système interféromètre (1), les moyens capteurs d'image (2) comportant au minimum un agencement capteur photosensible, et des moyens capteurs d'image (2) pour récupérer l'image, **caractérisé en ce que** les moyens capteurs d'image (2) sont agencés pour capter de façon indépendante les sorties d'antiphase du système interféromètre et que les moyens de traitement de signal (7) comportent des moyens de soustraction agencés pour déduire les signaux des moyens capteurs d'image (2) correspondant aux sorties d'antiphase.

**5.** Système de visualisation selon la revendication 4, dont les moyens capteurs d'image (2) comportent une paire d'agencements capteurs photosensibles agencés pour recevoir les sorties d'antiphase de bras respectifs de système d'interféromètre.

**6.** Système de visualisation selon la revendication 4, dont les moyens capteurs d'image (2) comportent une caméra vidéo unique et des moyens de mise en mémoire (8) de sortie d'image de la caméra.

**7.** Système d'image selon l'une ou l'autre des revendications 4 à 6 dont les moyens de soustraction (7) comportent un amplificateur différentiel agencé pour recevoir à son entrée des signaux provenant des moyens capteurs d'image (2) correspondant aux pixels identiques de sorties d'antiphase.

**8.** Système selon la revendication 7, dont les moyens de traitement comportent en outre des moyens multiplicateurs agencés pour multiplier une sortie d'amplificateur différentiel par un signal de référence de fréquence fixe.

# Fig.1.

EP 0 318 288 B1

INPUT SCENE

# Fig. 2.

# Fig. 3.

# Fig. 4.

OUTPUT
DIFFERENCED
IMAGE

# Fig. 5.

Fig.6.

COMPUTER

IMAGE STORE

8

9

2

Fig.7.

INPUT IMAGE

OUTPUT

Fig.8.

M

N

2

Fig.9.

Fig.10.

Fig.11.

## Fig. 12A.

Fig.12B.

# Fig.13A.

Fig. 13B.

Fig.14A.

Fig.14B.

## Fig.15A.

Fig. 15B.

# Fig.16A.

## Fig.16B.